# EUROPÄISCHE PATENTANMELDUNG

(11) **EP 2 987 919 A1**
(43) Veröffentlichungstag der Anmeldung: **24.02.2016**
(21) Anmeldenummer: 14181563.9
(22) Anmeldetag: 20.08.2014
(51) Int. Cl.: E03D 5/10, E03D 13/00, E03C 1/05

(54) **Spülvorrichtung**

(71) Anmelder: Geberit International AG, 8645 Jona (CH)
(72) Erfinder: Oberholzer, Roland, 8610 Uster (CH)
(74) Vertreter: Frischknecht, Harry Ralph

(57) **Zusammenfassung**

Eine Spülvorrichtung (1) für einen Sanitärartikel (2), insbesondere ein Urinal oder eine Toilette, umfasst eine Steuerungseinheit (3), und ein mit der Steuerungseinheit (3) ansteuerbares Spülventil (4) zur Steuerung eines Spülvorgangs, wobei bei einem Spülvorgang eine Flüssigkeit zur Spülung oder zur Reinigung des Sanitärartikels (2) eingeleitet wird, wobei mit der Steuerungseinheit (3) ein Spülregime für die Spülauslösung vorgebbar ist. Die Steuerungseinheit (3) umfasst weiterhin einen Temperatursensor (5) zur Erfassung der Umgebungstemperatur (T), wobei der Temperatursensor (5) über einen Datenkanal (6) mit der Steuerungseinheit (3) in Verbindung steht und wobei aufgrund der Umgebungstemperatur (T) das Spülregime anpassbar ist.

## Beschreibung

### TECHNISCHES GEBIET

Die vorliegende Erfindung betrifft eine Spülvorrichtung nach dem Oberbegriff von Anspruch 1.

### STAND DER TECHNIK

Aus dem Stand der Technik ist eine Vielzahl von Spülsteuerungen zur Spülung von Urinalen oder Toiletten bekannt.

Gerade bei öffentlichen Toiletten oder Urinalen wird vielfach eine Intervallsteuerung eingesetzt, welche in vorbestimmten Intervallen, einen Spülvorgang auslöst. Ein vorbestimmter Intervall kann beispielsweise 1 Stunde sein. Ausserdem sind Spülregime bekannt geworden, bei welchen nach einer Erstbenutzung die Steuerung eine vorbestimmte Zeitdauer abwartet bis eine erneute Spülung ausgelöst wird.

Gleichermassen werden derartige Spülregime bei wasserlosen Urinalen eingesetzt, wobei dann eine Reinigungslösung in vorbestimmten Intervallen anstelle von Spülwasser eingesetzt wird. Die Reinigungslösung wird auf die Innenseite des Urinals abgegeben.

Nachteilig am Stand der Technik ist die Tatsache, dass die Spülvorgänge nach einem festen Raster ausgeführt werden, was zu einem ineffizienten Einsatz des Spülwassers bzw. des Reinigungsmittels führt.

### DARSTELLUNG DER ERFINDUNG

Ausgehend von diesem Stand der Technik liegt der Erfindung eine Aufgabe zugrunde, eine Steuervorrichtung für Urinale und/oder Toiletten anzugeben, welche die Nachteile des Standes der Technik überwindet. Insbesondere ist es eine Aufgabe der Erfindung, eine Steuervorrichtung anzugeben, welche ein Reinigungsvorgang bzw. ein Spülvorgang bezüglich hygienischen Gesichtspunkten unter der Massgabe des möglichst effizienten Verbrauchs von Wasser oder von Reinigungsmittel bereitstellt.

Diese Aufgabe löst der Gegenstand von Anspruch 1. Demgemäss umfasst eine Spülvorrichtung für einen Sanitärartikel eine Steuerungseinheit und ein mit der Steuerungseinheit ansteuerbares Spülventil zur Steuerung eines Spülvorgangs. Der Sanitärartikel ist vorzugsweise ein Urinal oder eine Toilette. Bei einem Spülvorgang wird eine Flüssigkeit zur Spülung oder zur Reinigung des Sanitärartikels eingeleitet. Die Flüssigkeit strömt dabei in den Sanitärartikel ein. Mit der Steuerungseinheit ist ein Spülregime für die Spülauslösung vorgebbar, nach welchem Spülregime die Spülung erfolgt. Die Steuerungseinheit umfasst weiterhin einen Temperatursensor zur Erfassung der um den Sanitärartikel herum herrschenden Umgebungstemperatur, wobei der Temperatursensor über einen Datenkanal mit der Steuerungseinheit in Verbindung steht und wobei aufgrund der Umgebungstemperatur das Spülregime anpassbar ist.

Das Spülregime wird also basierend auf die um den Sanitärartikel herrschende Temperatur angepasst. Insbesondere wird dabei die Abgabe der Flüssigkeit basierend auf der Umgebungstemperatur gesteuert. Der Temperatursensor stellt als Eingangsgrösse ein Temperatursignal oder Temperaturdaten über den Datenkanal der Steuerungseinheit zu Verfügung.

Durch die Erfassung der Umgebungstemperatur um den Sanitärartikel herum, kann das Spülregime effizient angepasst werden. Steigt die Umgebungstemperatur beispielsweise gegen 30°C an, beginnen sich die Bakterien im Urin stark zu vermehren und es kommt zu einer unangenehmen Geruchsentwicklung. Bei diesen Temperaturen kann ein üblicher Spülintervall die Anforderungen bezüglich der Hygiene nur ungenügend erfüllen. Insofern wird es durch die Erfassung der Umgebungstemperatur möglich, das Spülregime dahingehend anzupassen, dass die hygienischen Anforderungen unter einer vorteilhaften Dosierung der Flüssigkeit nach wie vor erfüllt werden.

Vorzugsweise umfasst die Steuerungseinheit einen Zeitgeber. Das Spülregime ist dabei derart ausgebildet, dass nach Ablauf einer Intervallzeit ein Spülvorgang auslösbar ist. Bei der Anpassung des Spülregimes ist diese Intervallzeit anpassbar.

Mit anderen Worten gesagt: Das Spülregime ist vorzugsweise derart ausgebildet, dass die Spülauslösung nach einer Intervallzeit zeitgesteuert erfolgt, wobei diese Intervallzeit basierend auf der durch den Temperatursensor gemessenen Temperatur verändert wird. Folglich handelt es sich bei diesem Spülregime um eine zeitgesteuerte Intervallsteuerung, welche unabhängig von der Benutzung des Sanitärartikels die Spülung einleitet. Die Intervallzeit kann nach den oben beschriebenen Anpassungen angepasst werden.

In einer Alternative umfasst die Steuerungseinheit einen Zeitgeber und ein Erfassungselement zur Erfassung der Benützung der Spülvorrichtung, wobei das Spülregime derart ausgebildet ist, dass nach Erfassung einer Benützung des Sanitärartikels eine Intervallzeit zu laufen beginnt und nach Ablauf dieser Intervallzeit ein Spülvorgang auslösbar ist. Bei der Anpassung des Spülregimes ist diese Intervallzeit anpassbar.

Mit anderen Worten gesagt: Das Spülregime ist gemäss der Alternative derart ausgebildet, dass die Spülauslösung nach einer Intervallzeit, welche bei einer Benützung des Sanitärartikels zu laufen beginnt, erfolgt. Folglich handelt es sich bei diesem Spülregime um eine Intervallsteuerung, welche abhängig von der Benutzung des Sanitärartikels die Spülung einleitet. Es wird also nach Ablauf einer Intervallzeit, gemessen ab einer Benutzung, die Spülung eingeleitet. Die Intervallzeit kann nach den oben beschriebenen Anpassungen angepasst werden. Für dieses Spülregime umfasst die Steuerungseinheit den besagten Zeitgeber und das besagte Erfassungselement.

Bei allen Ausführungen stehen der Zeitgeber und ggf. das Erfassungselement mit der Steuerungseinheit in Verbindung oder sind Teil davon.

Die Intervallzeit ist vorzugsweise 1 Stunde, 2 Stunden, 3 Stunden, 4 Stunden, 5 Stunden, 6 Stunden, 7 Stunden, 8 Stunden, 9 Stunden, 10 Stunden, 11 Stunden oder 12 Stunden.

In einer ersten Ausführung der Anpassung des Spülregimes ist bei steigender Umgebungstemperatur die Intervallzeit zwischen zwei Spülvorgängen verkleinerbar. Bei sinkender bzw. wieder sinkender Umgebungstemperatur ist die Intervallzeit zwischen zwei Spülvorgängen vergrösserbar. Somit kann ein Spülregime geschaffen werden, welches die Flüssigkeit sehr effizient einsetzt, indem die Intervallzeit zwischen zwei Spülvorgängen, bei welchem die Flüssigkeit dem Sanitärartikel zugeführt wird, verkleinert wird. Bei dieser ersten Ausführung handelt es sich um eine dynamische Anpassung des Spülregimes.

In einer zweiten Ausführung der Anpassung des Spülregimes ist, wenn die Umgebungstemperatur einen Grenzwert überschreitet, die Intervallzeit zwischen zwei Spülvorgängen verkleinerbar, und wenn die Umgebungstemperatur einen Grenzwert unterschreitet ist die Intervallzeit zwischen zwei Spülvorgängen vergrösserbar. Der Grenzwert ist bevorzugt im Bereich vom 25°C bis 30°C, insbesondere zwischen 25°C und 27°C. Alternativerweise ist der Grenzwert grösser als 25°C. Bei der zweiten Ausführung handelt es sich um eine statische Anpassung des Spülregimes.

In einer dritten Ausführung der Anpassung des Spülregimes ist bei steigender Umgebungstemperatur der Schaltzyklus des Spülventils vergrösserbar, wodurch eine grössere Menge der Flüssigkeit pro Spülvorgang abgebbar ist. Weiter ist bei sinkender Umgebungstemperatur der Schaltzyklus des Spülventils verkleinerbar, wodurch eine kleinere Menge der Flüssigkeit pro Spülvorgang abgebbar ist.

In einer vierten Ausführung der Anpassung des Spülregimes ist, wenn die Umgebungstemperatur einen Grenzwert überschreitet, der Schaltzyklus des Spülventils vergrösserbar ist, wodurch eine grössere Menge der Flüssigkeit pro Spülvorgang abgebbar ist, und wenn die Umgebungstemperatur einen Grenzwert unterschreitet der Schaltzyklus des Spülventils verkleinerbar ist, wodurch eine kleinere Menge der Flüssigkeit pro Spülvorgang abgebbar ist. Der Grenzwert liegt bevorzugt im Bereich vom 25°C bis 30°C ist, insbesondere zwischen 25°C und 27°C, oder bei grösser als 25°C ist.

Die dritte oder die vierte Ausführung kann mit den ersten beiden Ausführungen kombiniert werden, wobei dann sowohl die Intervallzeit als auch der Schaltzyklus angepasst wird oder in Alleinstellung als Anpassung eingesetzt werden.

In einer weiteren Ausführung wird bei Überschreiten eines vorbestimmten Grenzwertes ein separater Spülvorgang ausgelöst, wobei der vorbestimmte Grenzwert bevorzugt im Bereich vom 25°C bis 30°C ist, insbesondere zwischen 25°C und 27°C liegt, oder wobei der Grenzwert grösser als 25°C ist. Nach dem separaten Spülvorgang kann das Spülregime gemäss einer der oben beschriebenen Ausführungen angepasst werden.

Vorzugsweise ist der Temperatursensor im Bereich der Steuerungseinheit angeordnet. Besonders bevorzugt ist der Temperatursensor gemeinsam mit der Steuerungseinheit und dem Spülventil an oder auf einem Supportelement angeordnet, welches mit dem Sanitärartikel verbindbar ist. Das Supportelement ist dabei mit Schnittstellen zur Verbindung mit dem Sanitärartikel ausgebildet. In dieser Variante ist der Temperatursensor Teil des Sanitärartikels.

In einer anderen Variante ist der Temperatursensor in einem Abstand beabstandet zum Sanitärartikel bzw. zur Steuerungseinheit angeordnet. Beispielsweise ist der Temperatursensor im Bereich einer Wand montiert. Alternativerweise kann der Temperatursensor auch im Bereich einer Revisionsöffnung, welche Zugang zu einem Spülkasten oder ähnlichem bereitstellt, platziert werden.

Besonders bevorzugt ist das Temperatursensor möglichst nahe am Sanitärartikel, besonders bevorzugt ist der Temperatursensor in der Steuerungseinheit integriert. Sofern der Temperatursensor beabstandet zur Steuerungseinheit ist, so ist der Abstand zwischen der Steuerungseinheit und dem Temperatursensor vorzugsweise grösser als 0.3 Meter, insbesondere grösser als 0.5 Meter, besonders bevorzugt grösser als 1 Meter ist.

Vorzugsweise ist der Datenkanal zwischen dem Temperatursensor und der Steuerungseinheit ein drahtgebundener oder ein drahtloser Datenkanal. Die durch den Temperatursensor gemessenen Werte werden über den besagten Datenkanal vom Temperatursensor zur Steuerungseinheit übermittelt. Die Steuerungseinheit weist entsprechende Elemente auf, um die Daten zu empfangen, zu speichern und zu verarbeiten.

Eine Sanitärartikelanordnung umfasst einen Sanitärartikel und eine Spülvorrichtung nach obiger Beschreibung, wobei der Temperatursensor ausserhalb der flüssigkeitsführenden Oberflächen des Sanitärartikels angeordnet ist. Als flüssigkeitführende Oberflächen werden sämtliche Oberflächen der Sanitärartikelanordnung verstanden, welche bei Benutzung mit der Flüssigkeit zur Spülung oder zur Reinigung und/oder Urin in Kontakt kommen. Der Temperatursensor ist also derart angeordnet, dass dieser nicht mit der Flüssigkeit bzw. Urin in Kontakt kommt. Es wird also nicht die Temperatur der Flüssigkeit oder des Urins gemessen, sondern ausschliesslich die Lufttemperatur der Umgebung. Hierdurch wird eine Fehlmessung verhindert.

Vorzugsweise umfasst der Sanitärartikel eine Aufnahme für den Temperatursensor. Die Aufnahme liegt bevorzugt unterhalb oder beabstandet der wasserführenden Flächen des Sanitärartikels. Das heisst, der Temperatursensor ist derart angeordnet, dass dieser nicht mit der wasserführenden Fläche des Sanitärartikels in Kontakt steht. Die Steuerungseinheit steht ebenfalls mit dem Sanitärartikel in Verbindung.

Alternativ ist der Temperatursensor in einem Abstand beabstandet zum Sanitärartikel angeordnet und die Steuerungseinheit mit dem Sanitärartikel in Verbindung steht.

Temperatursensor und die Steuerungseinheit stehen dabei über den besagten drahtgebundenen oder drahtlosen Kommunikationskanal in Verbindung.

In einer Weiterbildung umfasst der Sanitärartikel vorzugsweise ein Becken mit einer Oberfläche. Das Becken dient der Aufnahme von den Ausscheidungen bei der Benützung. Weiter umfasst der Sanitärartikel einen Hohlraum, welcher über eine Revisionsöffnung zugänglich ist. Der Hohlraum kommt dabei nicht mit der Flüssigkeit oder den Ausscheidungen in Kontakt. Die Steuerungseinheit ist vorzugsweise mindestens teilweise in dem besagten Hohlraum angeordnet. Der Temperatursensor kann aus der Revisionsöffnung aus dem Hohlraum hinausragen oder aber im Hohlraum angeordnet sein. Im letzteren Fall ist der Hohlraum vorzugsweise derart ausgebildet, dass die Umgebungsluft gut in den Hohlraum einströmen kann. Der Temperatursensor kann aber auch beabstandet zur Steuerungseinheit angeordnet sei, wobei er dann nicht im Hohlraum platziert ist.

In einer Variante ist der Sanitärartikel an eine Wasserleitung angeschlossen, wobei das Spülventil den Zulauf der Flüssigkeit aus der Wasserleitung steuert. In einer alternativen Variante umfasst der Sanitärartikel einen Spülkasten, in welchem Spülwasser gelagert ist, wobei das Spülventil den Zulauf der Flüssigkeit aus dem Spülkasten steuert. In einer weiteren alternativen Variante umfasst der Sanitärartikel einen Tank, in welchem als die besagte Flüssigkeit eine Reinigungsflüssigkeit gelagert ist, wobei das Spülventil den Zulauf der Reinigungsflüssigkeit steuert.

Der Sanitärartikel kann also wassergespült oder wasserlos ausgebildet sein. Bei der wasserlosen Variante ist der Sanitärartikel bevorzugt als Urinal ausgebildet und wird mit der Reinigungsflüssigkeit gereinigt.

Ein Verfahren zur Steuerung einer Spülvorrichtung nach obiger Beschreibung ist dadurch gekennzeichnet, dass mit dem Temperatursensor die Umgebungstemperatur erfasst wird und ein der Temperatur entsprechendes Temperatursignal generiert wird, dass das Temperatursignal der Steuerungseinheit über den Datenkanal bereitgestellt wird, und dass anhand des Temperatursignals das Spülregime angepasst wird.

Die Anpassung des Spülregimes bei dem besagten Schritt erfolgt wie oben beschrieben.

Vorzugsweise wird beim Schritt der Anpassung der Steuerung die Intervallzeit angepasst. Alternativ oder zusätzlich wird beim Schritt der Anpassung der Steuerung ein separater Spülvorgang ausgelöst.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Abbildung einer Sanitärartikelanordnung mit einer Spülvorrichtung nach einer ersten Ausführungsform;
- Fig. 2: eine schematische einer Sanitärartikelanordnung mit einer Spülvorrichtung nach einer zweiten Ausführungsform;
- Fig. 3: eine Schnittdarstellung durch einen Sanitärartikel mit einer erfindungsgemässen Spülvorrichtung;
- Fig. 4a/b: eine schematische Darstellung eines möglichen ersten Spülregimes mit der erfindungsgemässen Spülvorrichtung; und
- Fig. 5a/b: eine schematische Darstellung eines möglichen zweiten Spülregimes mit der erfindungsgemässen Spülvorrichtung.

### BESCHREIBUNG BEVORZUGTER AUSFÜHRUNGSFORMEN

In den Figuren werden verschiedene Elemente einer erfindungsgemässen Spülvorrichtung 1 für einen Sanitärartikel 2 gezeigt. Der Sanitärartikel 2 ist vorzugsweise ein Urinal oder eine Toilette.

Grundsätzlich umfasst die Spülvorrichtung 1 eine Steuerungseinheit 3 und ein mit der Steuerungseinheit 3 ansteuerbares Spülventil 4 zur Steuerung eines Spülvorgangs. Beim Spülvorgang wird eine Flüssigkeit zur Spülung oder zur Reinigung des Sanitärartikels eingeleitet. Die Flüssigkeit kann beispielsweise Wasser sein, wobei man dann von einer Wasserspülung spricht. Die Flüssigkeit kann aber auch ein Reinigungsmittel sein, welches periodisch dem Sanitärartikel zugeführt wird. Im letzteren Fall kann der Sanitärartikel als wasserlos gespülter Sanitärartikel bezeichnet werden. Mit der Steuerungseinheit 3 ist ein Spülregime für die Spülauslösung vorgebbar bzw. definierbar. Das heisst, das Spülventil 4 wird nach dem Spülregime geöffnet und geschlossen, so dass die Flüssigkeit beim Spülvorgang dem Sanitärartikel 2 zugegeben wird.

Die Steuerungseinheit 3 umfasst weiterhin einen Temperatursensor 5 zur Erfassung der Umgebungstemperatur T. Die Umgebungstemperatur T ist dabei die Lufttemperatur, die im Raum 16 herrscht, im welchem der Sanitärartikel 2 montiert ist. Der Temperatursensor 5 steht über einen Datenkanal 7 mit der Steuerungseinheit 3 in Verbindung. Über den Datenkanal 7 können Signale oder Daten bezüglich der gemessenen Umgebungstemperatur T vom Temperatursensor 5 zur Steuerungseinheit 3 übermittelt werden. Aufgrund der Umgebungstemperatur T ist das durch die Steuerungseinheit 3 vorgebbare Spülregime anpassbar. Durch die Anpassung des Spülregimes kann unter der Massgabe, dass der Spülvorgang mit möglichst wenig Flüssigkeit ausgeführt werden soll, das Spülregime bezüglich hygienischer Gesichtspunkte optimiert werden.

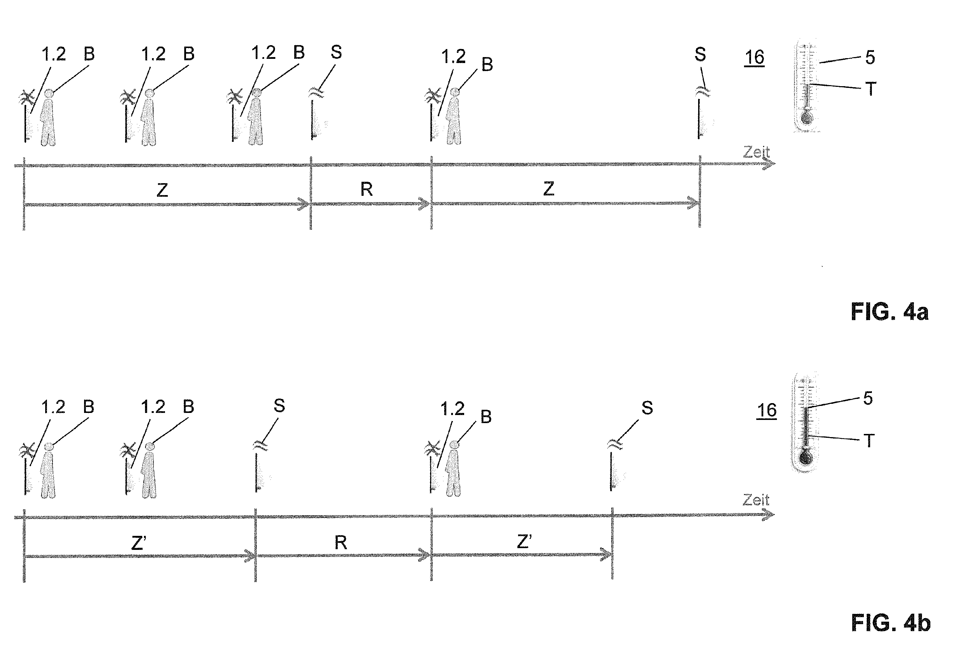

Die Anpassung des Spülregimes kann vielfältig sein und die Anpassung von verschiedenen Parametern umfassen. Beispielsweise ist eine Anpassung der Intervallzeit zwischen zwei Spülvorgängen basierend auf der Umgebungstemperatur T eine mögliche Anpassung des Spülregimes. Weiter kann auch die Menge der zuzugebenden Flüssigkeit basierend auf der Umgebungstemperatur T angepasst werden. In diesem Fall würde beispielsweise der Schaltzyklus des Spülventils entsprechend neu vorgegeben. Anhand der Figuren 4a bis 5b werden weiter unten zwei besonders bevorzugte Spülregime im Detail erläutert.

Bezüglich der Anordnung des Temperatursensors 5 zur Steuerungseinheit 3 bzw. zum Sanitärartikel 2 sind im Wesentlichen drei Varianten denkbar.

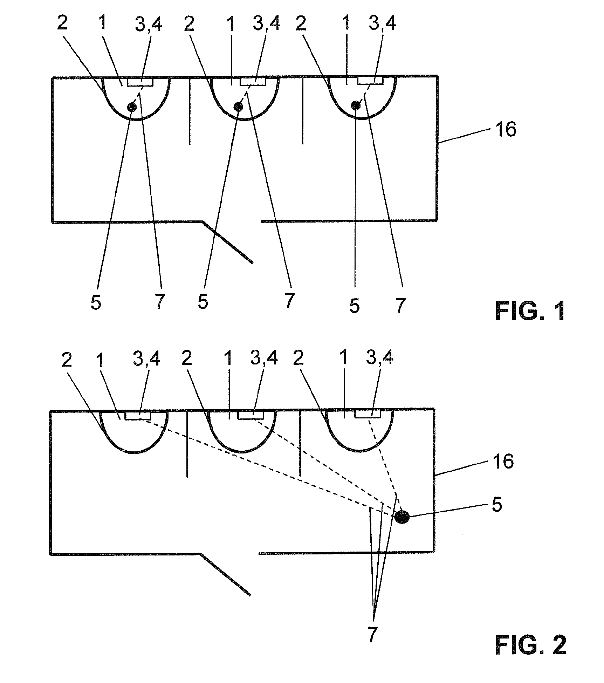

Die erste Variante wird in der Figur 1 gezeigt. Gemäss dieser Variante ist der Temperatursensor 5 zur Erfassung der Umgebungstemperatur T im Bereich der Steuerungseinheit 3 angeordnet. Das heisst, der Temperatursensor 5 ist benachbart zur Steuerungseinheit 3 oder integriert in die Steuerungseinheit 3 angeordnet. Besonders bevorzugt ist der Temperatursensor 5 gemeinsam mit der Steuerungseinheit 3 und dem Spülventil 4 auf einem Supportelement 6 angeordnet, welches dann mit dem Sanitärartikel 2 verbindbar ist. In der ersten Variante ist der Temperatursensor 5 derart angeordnet, dass dieser nicht mit den wasserführenden Oberflächen des Sanitärartikels 2 in Kontakt kommt. Der Temperatursensor 5 ist also derart angeordnet, dass dieser nicht die Temperatur des Urins oder der Flüssigkeit misst, sondern im Wesentlichen nur die Lufttemperatur der Umgebungsluft. Der Temperatursensor 5 steht dabei mit einem Datenkanal 7 mit der Steuerungseinheit 3 in Verbindung. Der Datenkanal 7 ist hier in dieser Ausführungsform vorzugsweise ein drahtgebundener Datenkanal. Er kann aber auch drahtlos sein.

In der zweiten Variante, welche in der Figur 2 gezeigt wird, ist der Temperatursensor 5 in einem Abstand A beabstandet oder entfernt zum Sanitärartikel 2 bzw. zur Steuerungseinheit 3 angeordnet. Beispielsweise ist es denkbar, den Temperatursensor 5 im Bereich einer Wand oder einer Revisionsöffnung anzuordnen. In der gezeigten Ausführungsform der Figur 2 ist nur ein einziger Temperatursensor 5 im Raum 16 vorhanden. Dieser eine Temperatursensor 5 ist über jeweils einen Datenkanal 7 mit einer oder mehreren Steuerungseinheiten 3 der Sanitärartikel 2 verbunden. Für den in der Figur 2 Ausführungsform ist ein einziger Temperatursensor 5 mit drei Steuerungseinheiten 3 von drei Sanitärartikeln 2 verbunden. Der Datenkanal 7 zwischen dem Temperatursensor 5 und den mehreren Steuerungseinheiten 3 ist dabei vorzugsweise ein drahtloser Datenkanal 7. Der Datenkanal 7 kann auch drahtgebunden sein. Der Abstand A zwischen der Steuerungseinheit 3 und dem Temperatursensor 5 ist bevorzugt grösser als 0,3 m, insbesondere grösser als 0,5 m, besonders bevorzugt grösser als 1 m. Der Maximalabstand hängt im Wesentlichen von der Ausbildung des Datenkanals 7 ab. Bezüglich der Verlässlichkeit der Messresultate des Temperatursensors 5 bezüglich der Temperaturverteilung im Raum 16 ist es aber Vorteilhaft, wenn der maximale Abstand nicht grösser 10 m oder 20 m ist.

In einer alternativen dritten Variante, welche in den Figuren nicht dargestellt ist, ist die Steuerungseinheit 3 ebenfalls zentral angeordnet. Eine einzige Steuerungseinheit 3 steht dabei in Verbindung mit mehreren Sanitärartikeln und löst den Spülvorgang für jeden der Sanitärartikel aus. Die Steuerungseinheit 3 umfasst in dieser Ausführungsform ein einziges Spülventil, welches den Spülfluidzufluss zu allen Sanitärartikeln steuert. Die Steuerungseinheit 3 umfasst wie in den anderen Ausführungsformen einen Temperatursensor zur Erfassung der Raumtemperatur. Mit Bezug zur Figur 2 kann gesagt werden, dass die Steuerungseinheit 3 mit dem Spülventil im Bereich des dort gezeigten Temperatursensors 5 platziert ist.

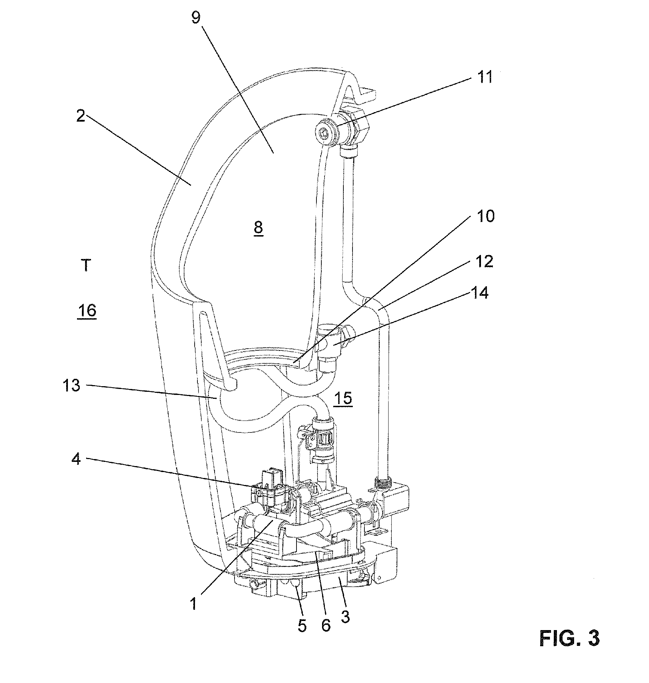

In der Figur 3 wird eine Schnittdarstellung gemäss einer möglichen Ausführungsform eines Sanitärartikels 2 gezeigt. Der Sanitärartikel 2 ist hier als Urinal dargestellt.

Das Urinal umfasst in der gezeigten Ausführungsform ein Urinalbecken 9, das in einen Urinalablauf 10 mündet. Der Urinalablauf 10 steht dann mit einer Abflussvorrichtung in Verbindung, welche hier nicht dargestellt ist. Die Abflussvorrichtung ist dann an ein Abwassernetz angeschlossen. Die Abflussvorrichtung umfasst vorzugsweise einen Geruchsverschluss, wie einen Siphon oder eine Dichtmembran.

Im oberen Bereich des Urinalbeckens 9 ist ein Düsenkopf 11 angeordnet, über welchen die Flüssigkeit dem Urinalbecken 9 zugebbar ist. Der Düsenkopf 11 steht über eine Zuleitung 12 mit dem Spülventil 4 in Verbindung. Das Spülventil 4 wiederum steht mit einer weiteren Leitung 13 mit einem Wasseranschluss 14 in Verbindung. Sobald nun das Spülventil geöffnet wird, kann das Spülwasser vom Wasseranschluss durch die weitere Leitung 13 über das Spülventil 4 und die Zuleitung 12 zum Düsenkopf 11 gelangen. Von dort wird das Urinalbecken 9 entsprechend gespült.

Das Spülventil 4 ist hier gemeinsam mit der Steuerungseinheit 3 auf einem Supportelement 6 angeordnet. Das Supportelement 6 ist ein mechanischer Träger, über welchen die Steuerungseinheit 3 und das Spülventil 4 am Sanitärartikel 2 befestigt sind. Weiter ist auf dem Supportelement 6 der Temperatursensor 5 angeordnet. Der Temperatursensor 5 steht, wie bereits oben beschrieben, über einen Datenkanal mit der Steuerungseinheit 3 in Verbindung. Der Temperatursensor 5 ist hier auf der unteren Seite gegenüber der Steuerungseinheit 3 und dem Spülventil 4 am Supportelement 6 angeordnet. Besonders bevorzugt ist das Supportelement 6 bezüglich des Sanitärartikels 2 derart ausgebildet, dass der Temperatursensor 5 unterhalb des Sanitärartikels 2 im eingebauten Zustand liegt und somit von der Luft frei überströmt werden kann.

Alternativ kann der Temperatursensor 5 auch innerhalb des Hohlraums 15 des Urinalbeckens 9 angeordent sein. Gegenüber der in der Figur 3 gezeigten Anordnung, in welcher der Temperatursensor 5 ausserhalb des Hohlraums 15 liegt, ist der Hohlraum 15 zugänglich zu machen, so dass die Umgebungsluft gut zum Temperatursensor 5 zugeleitet wird. Anderenfalls muss die gemessene Temperatur im Hohlraum 15 entsprechend korrigiert werden. Die Anordnung innerhalb des Hohlraums 15 hat den Vorteil, dass die Vandalensicherheit erhöht werden kann.

Der Temperatursensor 5 ist in allen Ausführungsformen vorzugsweise derart angeordnet, dass dieser ausserhalb der wasserführenden Oberfläche 8 des Sanitärartikels 2 angeordnet ist. Die wasserführende Oberfläche 8 ist hier im Wesentlichen die Oberfläche des Urinalbeckens 9 sowie die Oberflächen der Abflussvorrichtung. Diese Oberflächen kommen mit dem Urin und der Flüssigkeit in Kontakt. Der Temperatursensor 5 kommt also nicht mit dem Urin oder der Spülflüssigkeit in Kontakt.

Anstelle der Zuleitung 12, der Leitung 13 und dem Wasseranschluss 14 kann die Sanitärartikelanordnung auch andersartig ausgebildet sein. Beispielsweise ist es denkbar, dass anstelle der Wasserleitung ein Spülkasten vorhanden ist, wobei der Spülkasten über die Leitung 13 mit der Zuleitung 12 in Verbindung steht. Alternativ kann auch ein Tank vorgesehen sein, in welcher eine Reinigungsflüssigkeit gelagert ist, wobei das Spülventil den Zugang des Reinigungsventils entsprechend steuert.

In den Figuren 4a und 4b wird ein Spülregime nach einer Ausführung gezeigt. In der Figur 4a wird das Spülregime bei normaler Umgebungstemperatur dargestellt und in der Figur 4b wird das Spülregime bei erhöhter Umgebungstemperatur dargestellt. Die in den Figuren 4a und 4b gezeigten Sanitärartikel 2 sind gemäss obiger Beschreibung ausgebildet.

Mit Bezug zur Figur 4a: Sobald ein Benutzer B die Sanitäranordnung 1 benützt, startet eine Intervallzeit Z zu laufen. Nach Ablauf der Intervallzeit Z wird eine Spülung S ausgelöst. Die Spülauslösung wird durch das Bezugszeichen S gezeigt. Während der Intervallzeit erfolgt keine Spülauslösung, das heisst, die Spülauslösung S erfolgt unabhängig von der Zahl der Benutzung der Sanitärartikelanordnung. Anschliessend nach der Spülauslösung folgt eine Ruhezeit R. In dieser Ruhezeit R läuft die Intervallzeit Z nicht. Nach einer weiteren Benützung, in der Figur 4a am Ende der Ruhezeit R dargestellt, beginnt wiederum die Intervallzeit Z zu laufen und es wird eine erneute Spülung ausgelöst.

Mit Bezug zur Figur 4b: Steigt nun die Temperatur der Umgebungsluft im Raum an, wird dieser Anstieg durch den Temperatursensor 5 erfasst und das Spülregime wird angepasst. In der gezeigten Ausführungsform wird die Intervallzeit Z entsprechend verkürzt. Ab der Benützung der Sanitärartikelanordnung läuft eine verkürzte Intervallzeit Z' ab bis ein Spülvorgang S ausgelöst wird. Es folgt dann wieder eine Ruhezeit R bis die Sanitärartikelanordnung erneut benützt wird. Ab der erneuten Benützung läuft wiederum eine verkürzte Intervallzeit Z' ab bis ein erneuter Spülvorgang S ausgeführt wird. Die Intervallzeit Z wird also verkürzt.

Senkt sich die Umgebungstemperatur im Bereich der Sanitärartikelanordnung wieder ab, wird die Intervallzeit wieder verlängert, so wie dies in der Figur 4a dargestellt ist.

Für das Spülregime nach dieser Ausführungsform umfasst die Steuerungseinheit 3 einen Zeitgeber zur Vorgabe der Intervallzeit Z und ein Erfassungselement zur Erfassung der Benützung der Spülvorrichtung. Anhand des Zeitgebers Z wird das Spülventil 4 angesteuert.

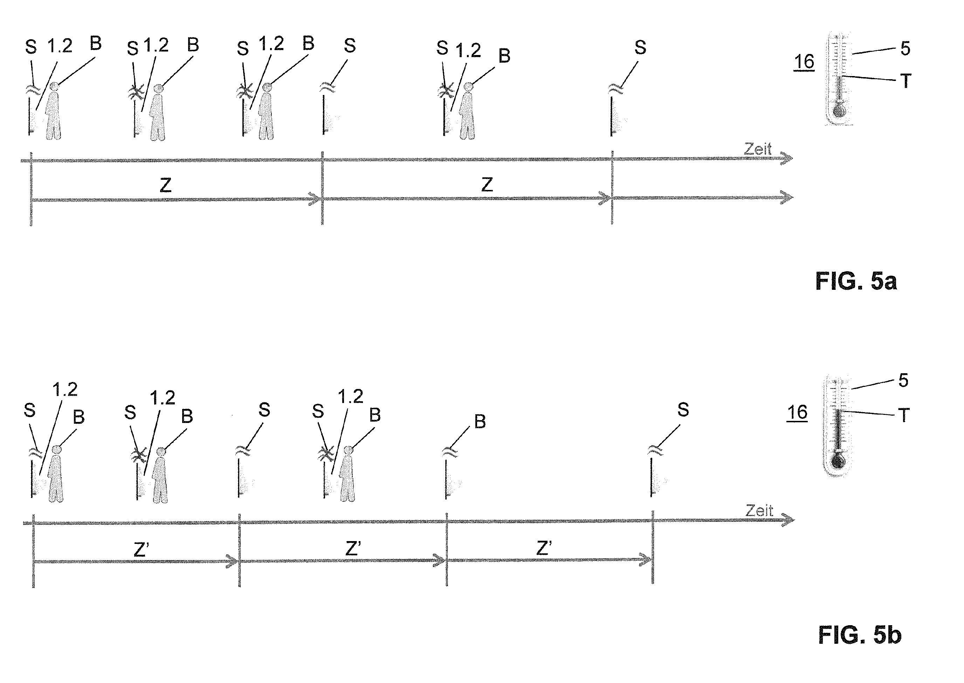

In den Figuren 5a und 5b wird ein Spülregime nach einer anderen Ausführung gezeigt. In der Figur 5a wird das Spülregime bei normaler Umgebungstemperatur dargestellt und in der Figur 5b wird das Spülregime bei erhöhter Umgebungstemperatur dargestellt. Die in den Figuren 5a und 5b gezeigten Sanitärartikel 2 sind gemäss obiger Beschreibung ausgebildet.

Mit Bezug zur Figur 5a: Nach Ablauf der Intervallzeit Z wird eine Spülung S ausgelöst. Die Spülauslösung wird durch das Bezugszeichen S gezeigt. Während der Intervallzeit erfolgt keine Spülauslösung, das heisst, die Spülauslösung S erfolgt unabhängig von der Zahl der Benutzung der Sanitärartikelanordnung. Unmittelbar nach Ablauf der ersten Intervallzeit Z beginnt die nächste Intervallzeit Z zu laufen, wobei nach deren Ablauf wiederum eine Spülung S ausgelöst wird.

Mit Bezug zur Figur 5b: Steigt nun die Temperatur der Umgebungsluft im Raum an, wird dieser Anstieg durch den Temperatursensor 5 erfasst und das Spülregime wird angepasst. In der gezeigten Ausführungsform wird die Intervallzeit Z entsprechend verkürzt. Die verkürzte Intervallzeit wird mit dem Bezugszeichen Z' dargestellt.

Senkt sich die Umgebungstemperatur im Bereich der Sanitärartikelanordnung wieder ab, wird die Intervallzeit wieder verlängert, so wie dies in der Figur 5a dargestellt ist.

Für das Spülregime nach dieser Ausführungsform umfasst die Steuerungseinheit 3 einen Zeitgeber, wobei das Spülregime derart ausgebildet ist, dass nach Ablauf einer festen Intervallzeit ein Spülvorgang auslösbar ist.

Unabhängig von der Ausführung des Spülregimes sind bezüglich der Umgebungstemperatur zwei verschiedene Arten der Anpassung des Spülregimes denkbar, nämlich eine dynamische Anpassung oder eine statische Anpassung.

Bei der dynamischen Anpassung wird bei steigender Umgebungstemperatur T die Intervallzeit Z zwischen zwei Spülvorgängen verkleinert. Bei sinkender Umgebungstemperatur T wird die Intervallzeit Z zwischen zwei Spülvorgängen vergrössert. Die Veränderung der Intervallzeit kann dabei linear zur Veränderung der Umgebungstemperatur T erfolgen.

Bei der statischen Anpassung des Spülregimes wird die Intervallzeit Z zwischen zwei Spülvorgängen verkleinert, wenn die Umgebungstemperatur T einen festen Grenzwert überschreitet. Die Intervallzeit Z wird dann wieder grösser, wenn der besagte Grenzwert unterschritten wird. Vorzugsweise liegt der Grenzwert im Bereich von 25 bis 30°C, insbesondere zwischen 25° und 27°C. Besonders bevorzugt ist der Grenzwert grösser als 25°C.

Unabhängig von der Ausführung des Spülregimes und von der Anpassung desselben, kann bei Überschreiten eines vorbestimmten Grenzwerts ein separater Spülvorgang ausgelöst werden. Vorzugsweise liegt der Grenzwert im Bereich von 25 bis 30°C, insbesondere zwischen 25° und 27°C. Besonders bevorzugt ist der Grenzwert grösser als 25°C.

### BEZUGSZEICHENLISTE

- 1: Spülvorrichtung
- 2: Sanitärartikel
- 3: Steuerungseinheit
- 4: Spülventil
- 5: Temperatursensor
- 6: Supportelement
- 7: Datenkanal
- 8: wasserführende Oberfläche
- 9: Urinalbecken
- 10: Urinalablauf
- 11: Düsenkopf
- 12: Zuleitung
- 13: weitere Leitung
- 14: Wasseranschluss
- 15: Hohlraum
- 16: Raum

- R: Ruhezeit
- S: Spülauslöung
- T: Umgebungstemperatur
- Z: Intervallzeit
- Z': verkürzte Intervallzeit

## Patentansprüche

1. Spülvorrichtung (1) für einen Sanitärartikel (2), insbesondere ein Urinal oder eine Toilette, umfassend
eine Steuerungseinheit (3), und
ein mit der Steuerungseinheit (3) ansteuerbares Spülventil (4) zur Steuerung eines Spülvorgangs, wobei bei einem Spülvorgang eine Flüssigkeit zur Spülung oder zur Reinigung des Sanitärartikels (2) eingeleitet wird,
wobei mit der Steuerungseinheit (3) ein Spülregime für die Spülauslösung vorgebbar ist,
**dadurch gekennzeichnet,**
**dass** die Steuerungseinheit (3) weiterhin einen Temperatursensor (5) zur Erfassung der Umgebungstemperatur (T) umfasst, wobei der Temperatursensor (5) über einen Datenkanal (6) mit der Steuerungseinheit (3) in Verbindung steht und wobei aufgrund der Umgebungstemperatur (T) das Spülregime anpassbar ist.

2. Spülvorrichtung (1) nach Anspruch 1, **dadurch gekennzeichnet, dass** die Steuerungseinheit (3) einen Zeitgeber umfasst, wobei das Spülregime derart ausgebildet ist, dass nach Ablauf einer Intervallzeit (Z) ein Spülvorgang (S) auslösbar ist, wobei diese Intervallzeit (Z) basierend auf der durch den Temperatursensor (5) gemessenen Umgebungstemperatur (T) veränderbar ist.

3. Spülvorrichtung (1) nach Anspruch 1, **dadurch gekennzeichnet, dass** die Steuerungseinheit (3) einen Zeitgeber und ein Erfassungselement zur Erfassung der Benützung der Spülvorrichtung umfasst, wobei das Spülregime derart ausgebildet ist, dass nach Erfassung einer Benützung des Sanitärartikels eine Intervallzeit (Z) zu laufen beginnt und nach Ablauf dieser Intervallzeit (Z) ein Spülvorgang (S) auslösbar ist, wobei diese Intervallzeit (Z) basierend auf der durch den Temperatursensor (5) gemessenen Umgebungstemperatur (T) veränderbar ist.

4. Spülvorrichtung (1) nach Anspruch 2 oder 3, **dadurch gekennzeichnet, dass** bei steigender Umgebungstemperatur (T) die Intervallzeit (Z) zwischen zwei Spülvorgängen verkleinerbar ist, und dass bei sinkender Umgebungstemperatur (T) die Intervallzeit (Z) zwischen zwei Spülvorgängen vergrösserbar ist.

5. Spülvorrichtung (1) nach Anspruch 2 oder 3, **dadurch gekennzeichnet, dass** wenn die Umgebungstemperatur (T) einen Grenzwert überschreitet die Intervallzeit (Z) zwischen zwei Spülvorgängen verkleinerbar ist, und dass wenn die Umgebungstemperatur (T) einen Grenzwert unterschreitet die Intervallzeit (T) zwischen zwei Spülvorgängen vergrösserbar ist, wobei der Grenzwert bevorzugt im Bereich vom 25°C bis 30°C ist, insbesondere zwischen 25°C und 27°C liegt, oder wobei der Grenzwert grösser als 25°C ist.

6. Spülvorrichtung nach einem der vorhergehenden Ansprüchen, **dadurch gekennzeichnet, dass** bei steigender Umgebungstemperatur (T) der Schaltzyklus des Spülventils vergrösserbar ist, wodurch eine grössere Menge der Flüssigkeit pro Spülvorgang abgebbar ist, sowie dass bei sinkender Umgebungstemperatur (T) der Schaltzyklus des Spülventils verkleinerbar ist, wodurch eine kleinere Menge der Flüssigkeit pro Spülvorgang abgebbar ist,
oder dass wenn die Umgebungstemperatur (T) einen Grenzwert überschreitet der Schaltzyklus des Spülventils vergrösserbar ist, wodurch eine grössere Menge der Flüssigkeit pro Spülvorgang abgebbar ist, und wenn die Umgebungstemperatur (T) einen Grenzwert unterschreitet der Schaltzyklus des Spülventils verkleinerbar ist, wodurch eine kleinere Menge der Flüssigkeit pro Spülvorgang abgebbar ist, wobei der Grenzwert bevorzugt im Bereich vom 25°C bis 30°C ist, insbesondere zwischen 25°C und 27°C liegt, oder wobei der Grenzwert grösser als 25°C ist.

7. Spülvorrichtung (1) nach einem der vorhergehenden Ansprüchen, **dadurch gekennzeichnet, dass** bei Überschreiten eines vorbestimmten Grenzwertes ein separater Spülvorgang auslösbar, wobei der vorbestimmte Grenzwert bevorzugt im Bereich vom 25°C bis 30°C ist, insbesondere zwischen 25°C und 27°C liegt, oder wobei der Grenzwert grösser als 25°C.

8. Spülvorrichtung (1) nach einem der vorhergehenden Ansprüche, **dadurch gekennzeichnet, dass** der Temperatursensor (5) im Bereich der Steuerungseinheit (3) angeordnet ist, insbesondere dass der Temperatursensor (5) gemeinsam mit der Steuerungseinheit (3) und dem Spülventil (4) auf einem Supportelement (6) angeordnet ist, welches mit dem Sanitärartikel (2) verbindbar ist.

9. Spülvorrichtung (1) nach einem der vorhergehenden Ansprüche 1 bis 7, **dadurch gekennzeichnet, dass** der Temperatursensor (5) in einem Abstand (A) beabstandet zum Sanitärartikel (2) bzw. zur Steuerungseinheit (3) angeordnet ist, wobei der Abstand zwischen der Steuerungseinheit und dem Temperatursensor bevorzugt grösser als 0.3 Meter, insbesondere grösser als 0.5 Meter, oder besonders bevorzugt grösser als 1 Meter ist. Patent

10. Spülvorrichtung (1) nach einem der vorhergehenden Ansprüche, **dadurch gekennzeichnet, dass** der Datenkanal (7) zwischen dem Temperatursensor (5) und der Steuerungseinheit (3) ein drahtgebundener oder drahtloser Datenkanal (7) ist.

11. Sanitärartikelanordnung umfassend einen Sanitärartikel, insbesondere ein Urinal oder eine Toilette, und eine Spülvorrichtung (1) nach einem der vorhergehenden Ansprüche, wobei der Temperatursensor (5) ausserhalb der wasserführenden Oberfläche (8) des Sanitärartikels angeordnet ist.

12. Sanitärartikelanordnung nach Anspruch 11, **dadurch gekennzeichnet, dass** der Sanitärartikel (2) eine Aufnahme für den Temperatursensor (5) umfasst, welche Aufnahme bevorzugt unterhalb der wasserführenden Flächen des Sanitärartikels liegt, oder dass der Temperatursensor in einem Abstand beabstandet zum Sanitärartikel angeordnet ist und dass die Steuerungseinheit mit dem Sanitärartikel in Verbindung steht.

13. Sanitärartikelanordnung nach einem der Ansprüche 11 bis 12, **dadurch gekennzeichnet, dass** der Sanitärartikel an eine Wasserleitung angeschlossen ist, wobei das Spülventil den Zulauf der Flüssigkeit aus der Wasserleitung steuert, oder dass der Sanitärartikel einen Spülkasten umfasst, in welchem Spülwasser gelagert ist, wobei das Spülventil den Zulauf der Flüssigkeit aus dem Spülkasten steuert, oder dass der Sanitärartikel einen Tank umfasst, in welchem eine Reinigungsflüssigkeit gelagert ist, wobei das Spülventil den Zulauf der Reinigungsflüssigkeit steuert.

14. Verfahren zur Steuerung einer Spülvorrichtung nach einem der vorhergehenden Ansprüche 1 bis 10, **dadurch gekennzeichnet,**
**dass** mit dem Temperatursensor die Umgebungstemperatur erfasst wird und ein der Temperatur entsprechendes Temperatursignal generiert wird,
**dass** das Temperatursignal der Steuerungseinheit über den Datenkanal bereitgestellt wird, und
**dass** anhand des Temperatursignals das Spülregime angepasst wird.

15. Verfahren nach Anspruch 14, **dadurch gekennzeichnet, dass** beim Schritt der Anpassung der Steuerung die Intervallzeit angepasst wird und/oder dass beim Schritt der Anpassung der Steuerung ein separater Spülvorgang ausgelöst wird.
